# EUROPEAN PATENT APPLICATION

(11) **EP 2 078 454 A1**
(43) Date of publication of application: **15.07.2009**
(21) Application number: 08022534.5
(22) Date of filing: 30.12.2008
(51) Int. Cl.: A01G 9/24

(54) **Radiant heating system for greenhouses used for the ground cultivation of crops**

(30) Priority: 10.01.2008 IT MI20080030
(71) Applicant: Politecnico di Torino, 10129 Torino (IT); Seppelfricke Distribuzione S.r.l., 31058 Susegana TV (IT)
(72) Inventor: Caldera, Carlo, 10129 Torino (IT); Cavaleri, Andrea, 10129 Torino (IT); Bravi, Osvaldo, 31015 Conegliano(TV) (IT)
(74) Representative: Jaumann, Paolo

(57) **Abstract**

The present invention envisages the division of the plan surface area into two sections, i.e. an irrigated section and a non-irrigated section. The sections may have different geometric configurations. As shown in Fig. 1, the sections are arranged in alternating strips and, more precisely, a heated access zone (B) and an irrigated cultivated zone (A).

## Description

The invention concerns a radiant heating system for greenhouses used for the ground cultivation of crops.

It is known to use radiant floor heating and cooling systems in which the radiant layer is made of concrete. It is also known to use dry-built radiant systems where the concrete radiant layer is eliminated.

These radiant systems are also used for heating growing greenhouses. In this particular case it is known that there are applications where the entire greenhouse area is occupied by the radiant floor and cultivation is performed in pots, on benches or on shelving, as well as applications where the shelving or the benches themselves are heated by means of radiant systems.

Applications for the ground cultivation of crops are also known where the heating is performed by concrete radiant layers which completely separate the cultivated ground from the natural ground.

The known radiant systems are therefore not suitable for use in "ground cultivation" greenhouses.

Air (or all-air) heating applications are also known in the context of growing greenhouses. In this latter case "ground cultivation" is facilitated, but it can be noted how systems for heating growing greenhouses are not liked by a whole range of insects which perform natural pollination. Therefore, all-air heating systems are subject to limitations in particular when the cultivation activity is associated with the production of fruit and vegetables.

Finally, it is known how the production of fruit crops (for example, fruit, vegetables, etc.) is dependent not only on a minimum air temperature, but also on a maximum temperature of the ground in the vicinity of the plant roots, which temperature, if exceeded, results in death of the plant.

The irrigated zone will be intended to accommodate the crops and will be irrigated by means of controlled irrigation systems (e.g. drip irrigation at the plant roots). The non-irrigated section (B), which is intended to allow access by operators and machines, will be equipped with radiant heating systems.

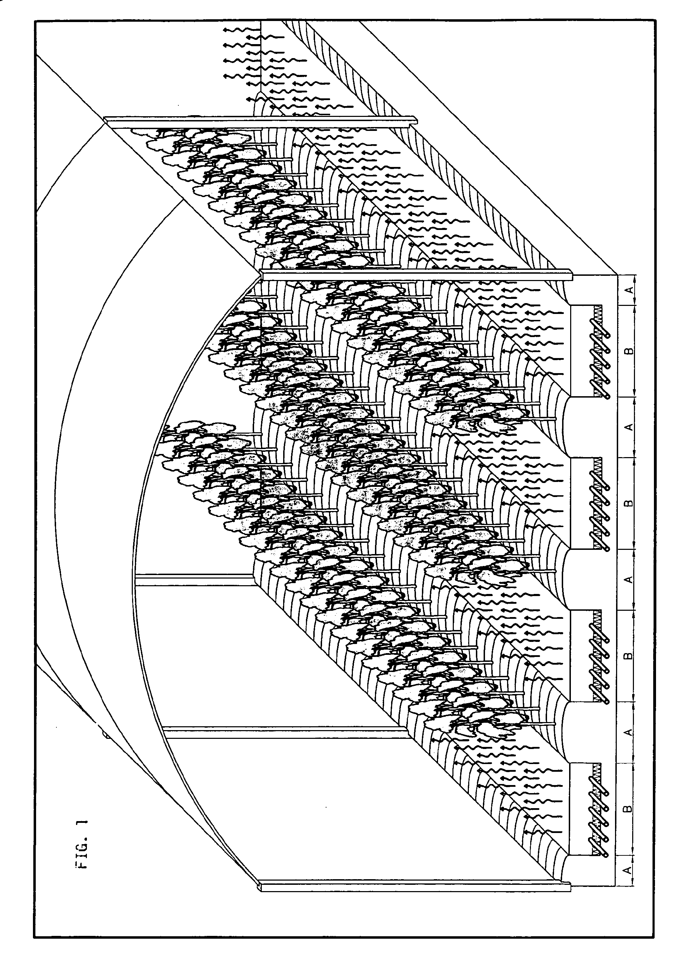

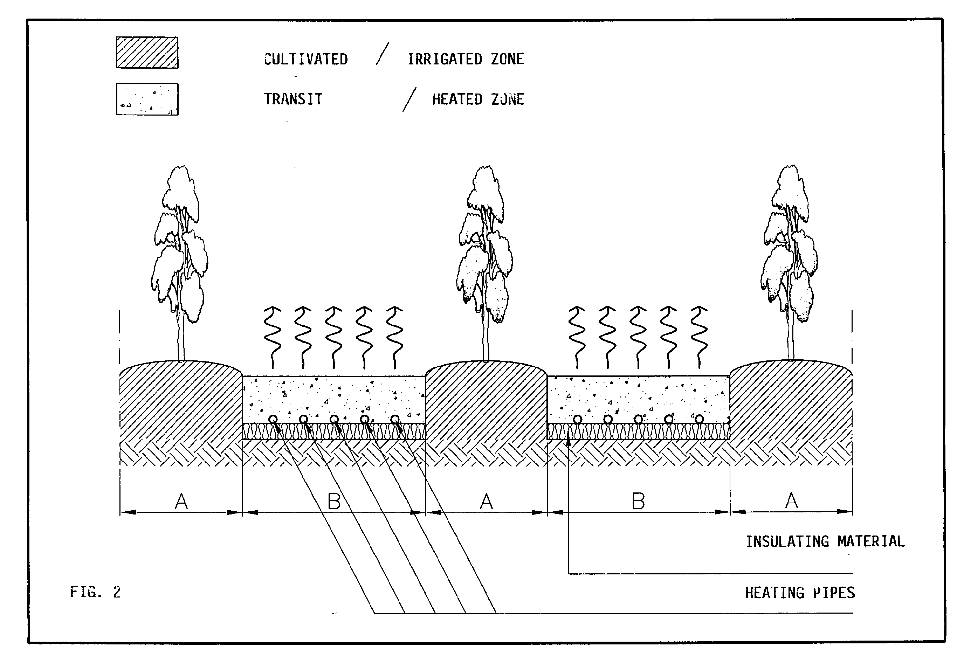

The zone equipped with the radiant systems may be protected from infiltration by means of waterproofing membranes or vapour barriers on the bottom side and on the two sides (see Fig. 2) and may envisage the use of insulating layers for reducing heat loss to the ground.

The heating pipes may be installed inside a conventional concrete radiant layer or may be housed inside a layer of loose or unconsolidated inert material.

The pipes will be positioned so as to favour heat exchange with the overlying air volume and limit the horizontal heat exchange which could increase the temperature of the ground in the vicinity of the roots. This is also assisted by the separation into irrigated zones and non-irrigated zones.

In this particular case any transmission of the horizontal heat between the non-irrigated zone and irrigated zone will result in a small increase in temperature in the vicinity of the roots owing, among other things, to the conversion, from the liquid state into the vapour state, of the excess water in the peripheral zones of the irrigated sections.

The advantages according to the invention may be summarised as follows:
- heating system resulting in thermohygrometric conditions which favour the natural pollinating action of insects and may therefore increase the number of annual production cycles;
- compatibility of the heating system with greenhouses for ground cultivation of fruit and vegetable plants;
- two-zone system which preserves the thermohygrometric conditions necessary for crop cultivation (e.g. maximum temperatures at the roots and minimum air temperature and humidity);
- system which favours the growth of plants and ripening of the fruit;
- system which favours the use of low-temperature heat and therefore also the use of alternative energy sources (e.g. geothermal energy);
- system which reduces external heat losses of the enclosed space since it is known that the use of radiant systems results in greater stratification of the air temperatures.

The particular characteristic feature of the invention is therefore that of dividing the surface area into two sections, one of which is not irrigated, but heated, and intended for internal access, while the second section is irrigated and intended for cultivation. The alternating arrangement of these zones results in the creation of a self-regulating system which preserves the conditions of the plant roots and improves the thermohygrometric conditions of the air.

Such a system moreover results in the creation of vital conditions suitable for exploiting the action of insects which perform artificial pollination and also favours growth of the plants and ripening of the fruit.

The use of auxiliary systems for controlling the humidity (e.g. the use of air systems) and the temperature (e.g. the use of water at a temperature different from the ambient temperature for drip irrigation and therefore for temperature control at the roots) does not adversely affect the innovative nature of the invention.

## Claims

1. Radiant heating system for greenhouses used for the ground cultivation of crops, **characterized in that** the plan surface area is divided into two sections, i.e. an irrigated cultivated zone (A in Fig. 1) and a heated access zone (B in Fig. 1).

2. System according to Claim 1, **characterized in that** the heating pipes are installed inside a concrete radiant layer or housed inside a layer of loose or unconsolidated inert material.

3. System according to Claims 1 and 2, **characterized in that** the heating pipes are positioned so as to favour thermal exchange with the overlying air volume.

4. System according to Claims 1 to 3, **characterized in that** the zone (B in Fig. 1) equipped with the radiant systems is protected from infiltration by means of waterproofing membranes or vapour barriers on the bottom side and on the two lateral sides by means of insulating layers.
